# EUROPÄISCHE PATENTSCHRIFT

(11) **EP 3 728 369 B1**
(45) Veröffentlichungstag und Bekanntmachung des Hinweises auf die Patenterteilung: **12.01.2022**
(21) Anmeldenummer: 18815220.1
(22) Anmeldetag: 14.12.2018
(51) Int. Cl.: C08G 18/48, C08G 18/79, C08G 18/22, C08G 18/24, C08G 18/32

(54) **POLYURETHANVERBUNDWERKSTOFFE BASIEREND AUF THERMOLATENTEN KATALYSATOREN**
POLYURETHANE COMPOSITE MATERIALS BASED ON THERMOLATENT CATALYSTS
MATÉRIAUX COMPOSITES DE POLYURÉTHANE À BASE DE CATALYSEURS THERMOLATENTS

(30) Priorität: 21.12.2017 EP 17209380
(43) Veröffentlichungstag der Anmeldung: 28.10.2020
(73) Patentinhaber: Covestro Deutschland AG, 51373 Leverkusen (DE)
(72) Erfinder: MEISENHEIMER, Richard Daniel Matthias, 51065 Köln (DE); HEINZ, Paul, 51375 Leverkusen (DE); RICHTER, Frank, 51373 Leverkusen (DE); ACHTEN, Dirk, 51375 Leverkusen (DE); KOLLE, Jörg, 50169 Kerpen-Horrem (DE)
(74) Vertreter: Levpat
(86) Internationale Anmeldenummer: PCT/EP2018/084857
(87) Internationale Veröffentlichungsnummer: WO 2019/121349

(56) Entgegenhaltungen:
- US-A1- 2012 220 717
- US-A1- 2015 218 375

## Beschreibung

Die vorliegende Erfindung betrifft die Verwendung von thermolatenten Katalysatoren für die Herstellung von Polyurethanverbundwerkstoffen. Der Herstellungsprozess zeichnet sich durch geringe Zeitdauer aus. Die entstehenden Verbundwerkstoffe weisen nur eine geringe Gelbfärbung auf.

Die Verwendung von thermolatenten Katalysatoren zur Herstellung von Polyurethanbeschichtungen ist aus WO 2011/051247 bekannt. Die weitgehend vollständige Reaktion der freien Isocyanatgruppen erforderte selbst nach Erhöhung der Temperatur auf 60 °C bzw. 80 °C wenigstens 20 Minuten. WO 2011/051247 zeigt nicht, dass durch deutliche Variation der Reaktionsbedingungen höhere Reaktionsgeschwindigkeiten möglich sind. Für die effiziente Herstellung von Verbundwerkstoffen, z.B. durch das Pultrusionsverfahren sind aber deutlich höhere Reaktionsgeschwindigkeiten wünschenswert.

Allerdings hat die Studie, die der vorliegenden Erfindung zugrunde liegt gezeigt, dass die Erhöhung der Reaktionstemperatur, die für eine schnellere Reaktion erforderlich ist, zu verfärbten Produkten führt, wenn das Reaktionsgemisch wie in WO 2011/051247 offenbart ohne Füllstoff eingesetzt wird. Dies ist für viele Anwendungen nachteilig. In derselben Studie hat sich überraschend gezeigt, dass der Zusatz von Füllstoffen geeignet ist, die Gelbfärbung des Produkts deutlich zu vermindern.

Somit besteht die der vorliegenden Erfindung zugrundeliegende Aufgabe in der Bereitstellung eines effizienten Verfahrens zur Herstellung von Verbundwerkstoffen. Diese sollen vorzugsweise weiterhin eine geringe Verfärbung aufweisen. Die vorgenannte Aufgabe wird durch die Ausführungsformen der Erfindung gelöst, die in den Patentansprüchen und in dieser Beschreibung offenbart werden.

In einer ersten Ausführungsform betrifft die vorliegende Erfindung ein Verfahren zur Herstellung eines Verbundwerkstoffs enthaltend die Schritte
a) Vermischen eines Polyisocyanats A, eines Polyols B und eines latenten Katalysators C gemäß einer der Formeln (I), (II) oder (III), 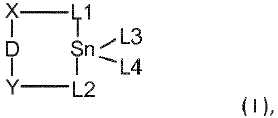 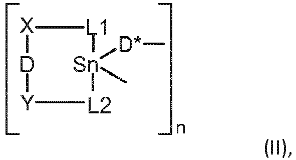 mit n > 1, 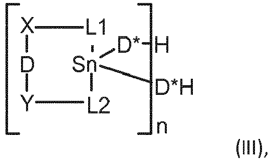 mit n > 1, wobei gilt:
   D steht für -O-, -S- oder -N(R1)-wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 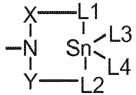 steht,
      oder R1 und L3 zusammen für -Z-L5- stehen;
   D^{∗} steht für -O- oder -S-;
   X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 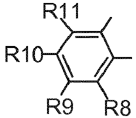 oder 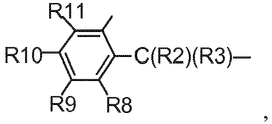 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
   L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
      wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
   L3 und L4 stehen unabhängig voneinander für -OH, -SH, -OR13, -Hal, - OC(=O)R14, -SR15, -OC(=S)R16, -OS(=O)₂OR17, -OS(=O)₂R18 oder -NR19R20, oder L3 und L4 zusammen stehen für -L1-X-D-Y-L2-,
      wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.
b) Benetzen eines Füllstoffs D mit dem in Verfahrensschritt a) erhaltenen Reaktionsgemisch; und
c) Aushärten der in Verfahrensschritt b) erhaltenen Mischung bei einer Temperatur von 120 bis 280 °C in weniger als 30 Minuten.

Vorzugsweise beträgt das molare Verhältnis von Isocyanatgruppen zu Epoxidgruppen zu Beginn des Verfahrensschrittes c) wenigstens 30 : 1.

### Polyisocyanat A

Unter "Polyisocyanat A" wird in der vorliegenden Anmeldung die Gesamtheit aller Verbindungen verstanden, die durchschnittlich wenigstens 1,6, bevorzugt wenigstens 1,8, stärker bevorzugt wenigstens 2,0 und am stärksten bevorzugt wenigstens 2,5 Isocyanatgruppen pro Molekül tragen.

Besonders praxisgerechte Ergebnisse stellen sich ein, wenn das erfindungsgemäß einzusetzende Polyisocyanat A einen Gehalt an Isocyanatgruppen von 8,0 bis 60,0 Gew.-%, vorzugsweise von 14,0 bis 40,0 Gew.-%, besonders bevorzugt von 16,0 bis 28,0 Gew.-% jeweils bezogen auf das Gewicht des Polyisocyanats A, aufweist.

Der Begriff "Polyisocyanate" bezeichnet in dieser Anmeldung monomere und/oder oligomere Polyisocyanate gleichermaßen. Zum Verständnis vieler Aspekte der Erfindung ist es jedoch wichtig, zwischen monomeren Diisocyanaten und oligomeren Polyisocyanaten zu unterscheiden. Wenn in dieser Anmeldung von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

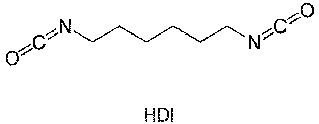

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind: 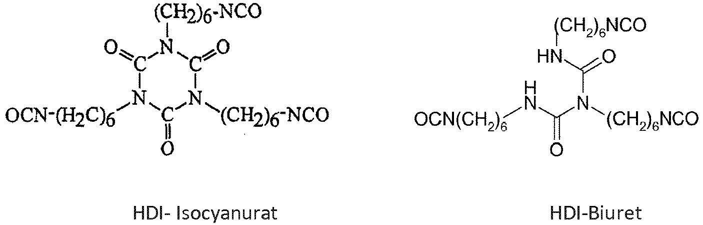 (idealisierte Strukturformeln)

Erfindungsgemäß beträgt der Gewichtsanteil an Isocyanatgruppen bezogen auf die Gesamtmenge des Polyisocyanats A wenigstens 15 Gew.-%.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

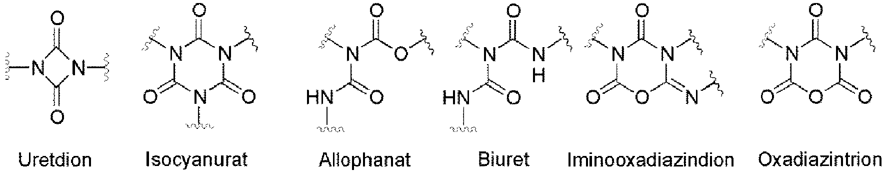

Gemäß einer bevorzugten Ausführungsform der Erfindung enthält das Polyisocyanat A ein oligomeres Polyisocyanat, dessen Isocyanuratstrukturanteil mindestens 50 mol-%, vorzugsweise mindestens 60 mol-%, stärker bevorzugt mindestens 70 mol-%, noch stärker bevorzugt mindestens 80 mol-%, noch stärker bevorzugt mindestens 90 mol-% und besonders bevorzugt mindestens 95 mol-% bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur im oligomeren Polyisocyanat, beträgt.

Die Anteile an Uretdion-, Isocyanurat-, Allophanat-, Biuret-, Iminooxadiazindion- und/oder Oxadiazintrionstruktur in einem Polyisocyanat können z.B. durch NMR-Spektroskopie bestimmt werden. Bevorzugt lässt sich hierbei die ¹³C-NMR-Spektroskopie, vorzugsweise protonenentkoppelt, einsetzen, da die genannten oligomeren Strukturen charakteristische Signale liefern.

Unabhängig von der zugrunde liegenden oligomeren Struktur (Uretdion-, Isocyanurat-, Allophanat-, Biuret-, Iminooxadiazindion- und/oder Oxadiazintrionstruktur) weist ein beim erfindungsgemäßen Verfahren einzusetzendes oligomeres Isocyanat vorzugsweise eine (mittlere) NCO-Funktionalität von 2,0 bis 5,0, vorzugsweise von 2,3 bis 4,5 auf.

Herstellverfahren für die im Polyisocyanat A erfindungsgemäß einzusetzenden oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP A 0 339 396 und EP-A 0 798 299 beschrieben.

Geeignete Polyisocyanate zur Herstellung des beim erfindungsgemäßen Verfahren einzusetzenden Polyisocyanats A und der darin enthaltenen monomeren und/oder oligomeren Polyisocyanate sind beliebige, auf verschiedene Weise, beispielsweise durch Phosgenierung in der Flüssig- oder Gasphase oder auf phosgenfreien Weg, wie z.B. durch thermische Urethanspaltung, zugängliche Polyisocyanate. Besonders gute Ergebnisse stellen sich ein, wenn es sich bei den Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan Isophorondiisocyanat; (IPDI), 1-Isocyanato-1-methyl-4(3)-isocyanatomethylcyclohexan, 2,4'- und 4,4'-Diisocyanatodicyclohexylmethan(H12MDI), 1,3-und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyl-dicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(iso¬cyanatomethyl)benzol (Xyxlylendiisocyanat; XDI), 1,3- und 1,4-Bis(1-isocyanato-1-methyl¬ethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136.

Geeignete monomere Monoisocyanate, die im Polyisocyanat A gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat oder beliebige Gemische solcher Monoisocyanate. Als monomeres Isocyanat mit einer Isocyanatfunktionalität größer zwei, das dem Polyisocyanat A gegebenenfalls zugesetzt werden kann, sei beispielhaft 4-Isocyanatomethyl-1,8-octandiisocyanat (Triisocyanatononan; TIN) genannt.

Gemäß einer Ausführungsform der Erfindung enthält das Polyisocyanat A höchstens 30 Gew.-%, insbesondere höchstens 20 Gew.-%, höchstens 15 Gew.-%, höchstens 10 Gew.-%, höchstens 5 Gew.% oder höchstens 1 Gew.-%, jeweils bezogen auf das Gewicht des Polyisocyanats A, an aromatischen Polyisocyanaten. Wie hier verwendet, bedeutet "aromatisches Polyisocyanat" ein Polyisocyanat, welches mindestens eine aromatisch gebundene Isocyanatgruppe aufweist.

Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform des erfindungsgemäßen Verfahrens wird ein Polyisocyanat A eingesetzt, das ausschließlich aliphatisch und/oder cycloaliphatisch gebundene Isocyanat-Gruppen aufweist.

Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind. Gemäß einer anderen bevorzugten Ausführungsform des erfindungsgemäßen Verfahrens wird ein Polyisocyanat A eingesetzt, das aus einem oder mehreren oligomeren Polyisocyanaten besteht oder diese enthält, wobei die ein oder mehreren oligomeren Polyisocyanate ausschließlich aliphatisch und/oder cycloaliphatisch gebundene Isocyanat-Gruppen aufweisen.

Gemäß einer weiteren Ausführungsform der Erfindung besteht das Polyisocyanat A zu mindestens 70, 80, 85, 90, 95, 98 oder 99 Gew.-%, jeweils bezogen auf das Gewicht des Polyisocyanats A, aus Polyisocyanaten, die ausschließlich aliphatisch und/oder cycloaliphatisch gebundene Isocyanat-Gruppen aufweisen. Praktische Versuche haben gezeigt, dass sich besonders gute Ergebnisse mit einem Polyisocyanat A erzielen lassen, bei dem die darin enthaltenen oligomeren Polyisocyanate ausschließlich aliphatisch und/oder cycloaliphatisch gebundene Isocyanat-Gruppen aufweisen. Gemäß einer besonders bevorzugten Ausführungsform des erfindungsgemäßen Verfahrens wird ein Polyisocyanat A eingesetzt, das aus einem oder mehreren oligomeren Polyisocyanaten besteht oder diese enthält, wobei die ein oder mehreren oligomeren Polyisocyanate auf Basis von 1,4-Diisocyanatobutan (BDI), 1,5-Diisocyanatopentan (PDI), 1,6-Diisocyanatohexan (HDI), Isophorondiisocyanat (IPDI) oder 4,4'-Diisocyanatodicyclohexylmethan (H12MDI) oder deren Mischungen aufgebaut sind.

Grundsätzlich sind monomere und oligomere Polyisocyanate zur Verwendung im erfindungsgemäßen Polyisocyanat A gleichermaßen geeignet. Folglich kann das Polyisocyanat A im Wesentlichen aus monomeren Polyisocyanaten oder im Wesentlichen aus oligomeren Polyisocyanaten bestehen. Sie kann aber auch oligomere und monomere Polyisocyanate in beliebigen Mischungsverhältnissen enthalten.

### Polyol B

Grundsätzlich ist als Polyol B jeder Alkohol mit einer durchschnittlichen OH-Funktionalität von wenigstens 2, bevorzugt 3 und einem OH-Gehalt von wenigstens 25 Gew.-% geeignet. Es ist auch möglich eine Mischung von 2, 3 oder mehreren Polyolen einzusetzen, wenn jedes der eingesetzten Polyole die vorgenannten Bedingungen erfüllt. Die Verwendung von Polyolen mit hoher OH-Funktionalität erhöht die Netzwerkdichte des entstehenden Polymers und erhöht Eigenschaften wie z.B. die Glasübergangstemperatur, die Härte, die Beständigkeit gegenüber Chemikalien und die Witterungsbeständigkeit.

Bevorzugte Polyole B sind aliphatische, cycloalipatische und aromatische ebenso wie heterocyclische Polyole. Allerdings kann die Verwendung aromatischer Polyole die Witterungsbeständigkeit des Polymers herabsetzen. Deswegen liegt ihr Anteil an der Gesamtmenge der eingesetzten Polyole vorzugsweise bei höchstens 20 Gew.-%, stärker bevorzugt höchstens bei 10 Gew.-%, noch stärker bevorzugt bei höchstens 5 Gew.-% und am stärksten bevorzugt bei höchstens 1 Gew.-%.

Bevorzugte Polyole B sind ausgewählt aus der Liste bestehend aus Glykol, Glycerin, Propandiol, Butandiol, Diethylenglycol, 1,2,10-Dekantriol, 1,2,8-Oktantriol, 1,2,3-Trihydroxybenzen, 1,1,1-Trimethylolpropan, 1,1,1-Trimethylolethan, Pentaerythritol und Zuckeralkoholen. Bevorzugt ist das Polyol B ein Gemisch, das zu wenigstens 80 Gew.-% Glycerin enthält. Stärker bevorzugt ist das Polyol B ein Gemisch, das zu wenigstens 90 Gew.-% Glycerin enthält.

Bevorzugt ist die Zusammensetzung des Reaktionsgemisches, das in Verfahrensschritt c) ausgehärtet wird, ist so gewählt, dass wenigstens 90 mol-%, stärker bevorzugt wenigstens 95 mol-% aller im Reaktionsgemisch vorliegenden mit Isocyanat reaktiven Gruppen Hydroxylgruppen sind.

Besonders bevorzugt ist die Zusammensetzung des Reaktionsgemisches, das in Verfahrensschritt c) ausgehärtet wird so gewählt, dass die aus der Liste bestehend aus Glykol, Glycerin, Propandiol, Butandiol, Diethylenglycol, 1,2,10-Dekantriol, 1,2,8-Oktantriol, 1,2,3-Trihydroxybenzen, 1,1,1-Trimethylolpropan, 1,1,1-Trimethylolethan, Pentaerythritol und Zuckeralkoholen ausgewählten Polyole wenigstens 90 mol-%, stärker bevorzugt wenigstens 95 mol-% und noch stärker bevorzugt 98 mol-% der im Reaktionsgemisch vorliegenden mit Isocyanat reaktiven Gruppen enthalten.

Unter "gegenüber Isocyanat reaktiven Gruppen werden in dieser Anmeldung Hydroxyl-, Thiol-, Carboxyl- und Aminogruppen, Amide, Urethangruppen, Säureanhydride und Epoxidgruppen verstanden. Dies bedeutet, dass die Anwesenheit weiterer Verbindungen, die gegenüber Isocyanat reaktive Gruppen tragen, erfindungsgemäß zwar möglich, aber mengenmäßig beschränkt ist. Es ist insbesondere bevorzugt, dass der Anteil der gegenüber Isocyanat reaktiven Gruppen, der in polymeren Polyolen enthalten ist, 9 mol-%, stärker bevorzugt 5 mol-% und noch stärker bevorzugt 2 mol-% nicht übersteigt. Ganz besonders bevorzugt ist das Reaktionsgemisch frei von polymeren Polyolen. Unter "polymeren Polyolen" werden in dieser Anmeldung OH funktionelle Verbindungen mit einem zahlenmittleren Molekulargewicht Mn wenigstens 2.000, bevorzugt wenigstens 10.000, besonders bevorzugt wenigstens 20.000 und ganz besonders bevorzugt wenigstens 50.000 verstanden.

Das Mengenverhältnis des Polyisocyanats A und des Polyols B wird vorzugsweise so gewählt, dass das stöchiometrische Verhältnis von Isocyanatgruppen des Polyisocyanats A und Hydroxylgruppen des Polyols B im Bereich zwischen 0,7 : 1 und 10 : 1, bevorzugt zwischen 0,8 : 1 und 8 : 1 und stärker bevorzugt zwischen 0,9 : 1 und 6 : 1 liegt.

### Thermolatenter Katalysator C

Der thermolatente Katalysator C ist dadurch gekennzeichnet, dass er bei Raumtemperatur eine deutlich geringere katalytische Aktivität aufweist als bei erhöhten Temperaturen.

Er hat eine chemische Struktur wie in einer der Formeln (I), (II) oder (III) beschrieben: 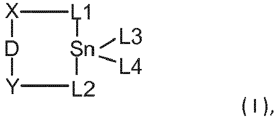 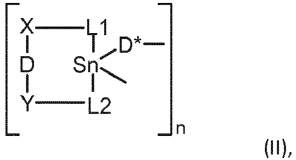 mit n > 1, 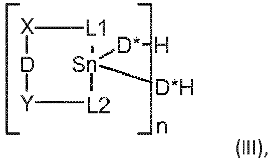 mit n > 1, wobei gilt:
D steht für -O-, -S- oder -N(R1)-
   wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 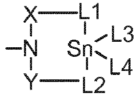 steht,
   oder R1 und L3 zusammen für -Z-L5- stehen;
D^{∗} steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 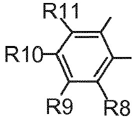 oder 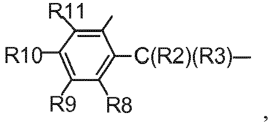 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
   wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, - OC(=O)R14, -SR15, -OC(=S)R16, -OS(=O)₂OR17, -OS(=O)₂R18 oder -NR19R20, oder L3 und L4 zusammen stehen für -L1-X-D-Y-L2-,
   wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

Bevorzugt handelt es sich bei D um -N(R1)-.

Bevorzugt handelt es sich bei R1 um Wasserstoff oder einen Alkyl-, Aralkyl-, Alkaryl- oder Arylrest mit bis zu 20 C-Atomen oder um den Rest 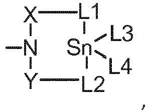 besonders bevorzugt um Wasserstoff oder einen Alkyl-, Aralkyl-, Alkaryl- oder Arylrest mit bis zu 12 C-Atomen oder um den Rest 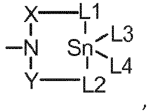 ganz besonders bevorzugt um Wasserstoff oder einen Methyl-, Ethyl-, Propyl-, Butyl-, Hexyl- oder Octyl-Rest, wobei Propyl-, Butyl-, Hexyl-, und Octyl für alle isomeren Propyl-, Butyl-, Hexyl- sowie Octylreste stehen, um Ph-, CH3Ph- oder um den Rest

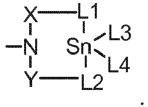

Bevorzugt handelt es sich bei D^{∗} um -O-.

Bevorzugt handelt es sich bei X, Y und Z um die Alkylenreste -C(R2)(R3)-, -C(R2)(R3)-C(R4)(R5)- oder den ortho-Arylenrest

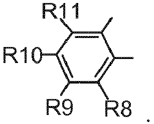

Bevorzugt handelt es sich bei R2 bis R7 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 8 C-Atomen, ganz besonders bevorzugt um Wasserstoff oder Alkylreste mit bis zu 8 C-Atomen, noch weiter bevorzugt um Wasserstoff oder Methyl.

Bevorzugt handelt es sich bei R8 bis R11 um Wasserstoff oder Alkylreste mit bis zu 8 C-Atomen, besonders bevorzugt um Wasserstoff oder Methyl.

Bevorzugt handelt es sich bei L1, L2 und L5 um -NR12-, -S-, -SC(=S)-, -SC(=O)-, -OC(=S)-, -O-, oder - OC(=O)-, besonders bevorzugt um -O-, oder -OC(=O)-.

Bevorzugt handelt es sich bei R12 um Wasserstoff oder einen Alkyl-, Aralkyl-, Alkaryl- oder Arylrest mit bis zu 20 C-Atomen, besonders bevorzugt um Wasserstoff oder einen Alkyl-, Aralkyl-, Alkaryl- oder Arylrest mit bis zu 12 C-Atomen, ganz besonders bevorzugt um Wasserstoff oder einen Methyl-, Ethyl-, Propyl-, Butyl-, Hexyl-oder Octyl-Rest, wobei Propyl-, Butyl-, Hexyl-, und Octyl für alle isomeren Propyl-, Butyl-, Hexyl- sowie Octylreste stehen.

Bevorzugt handelt es sich bei L3 und L4 um -Hal, -OH, -SH, -OR13, -OC(=O)R14, wobei die Reste R13 und R14 bis zu 20 Kohlenstoffatome, bevorzugt bis zu 12 Kohlenstoffatome aufweisen.

Besonders bevorzugt handelt es sich bei L3 und L4 um Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat, wobei Pr, Bu, Hex und Oct für alle isomeren Propyl-, Butyl-, Hexyl- sowie Octylreste stehen, noch weiter bevorzugt um Cl-, MeO-, EtO-, PrO-, BuO-, HexO-, OctO-, PhO-, Hexanoat, Laurat, oder Benzoat, wobei Pr, Bu, Hex und Oct für alle isomeren Propyl-, Butyl-, Hexyl- sowie Octylreste stehen. Bevorzugt handelt es bei R15 bis R20 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 12 C-Atomen, ganz besonders bevorzugt um Wasserstoff, Methyl-, Ethyl-, Propyl-, Butyl-, Hexyl-, oder Octyl-Reste, wobei Propyl-, Butyl-, Hexyl-, und Octyl für alle isomeren Propyl-, Butyl-, Hexyl- sowie Octylreste stehen.

Die Einheiten L1-X, L2-Y und L5-Z stehen bevorzugt für -CH₂CH₂O-, -CH₂CH(Me)O-, -CH(Me)CH₂O-, -CH₂C(Me)₂O-, -C(Me)₂CH₂O- oder -CH₂C(=O)O-.

Die Einheit L1-X-D-Y-L2 steht bevorzugt für: HN[CH₂CH₂O-]₂, HN[CH₂CH(Me)O-]₂, HN[CH₂CH(Me)O-][CH(Me)CH₂O-], HN[CH₂C(Me)₂O-]₂, HN[CH₂C(Me)₂O-][C(Me)₂CH₂O-], HN[CH₂C(=O)O-]₂, MeN[CH₂CH₂O-]₂, MeN[CH₂CH(Me)O-]₂, MeN[CH₂CH(Me)O-][CH(Me)CH₂O-], MeN[CH₂C(Me)₂O-]₂, MeN[CH₂C(Me)₂O-][C(Me)₂CH₂O-], MeN[CH₂C(=O)O-]₂, EtN[CH₂CH₂O-]₂, EtN[CH₂CH(Me)O-]₂, EtN[CH₂CH(Me)O-][CH(Me)CH₂O-], EtN[CH₂C(Me)₂O-]₂, EtN[CH₂C(Me)₂O-][C(Me)₂CH₂O-], EtN[CH₂C(=O)O-]₂, PrN[CH₂CH₂O-]₂, PrN[CH₂CH(Me)O-]₂, PrN[CH₂CH(Me)O-][CH(Me)CH₂O-], PrN[CH₂C(Me)₂O-]₂, PrN[CH₂C(Me)₂O-][C(Me)₂CH₂O-], PrN[CH₂C(=O)O-]₂, BuN[CH₂CH₂O-]₂, BuN[CH₂CH(Me)O-]₂, BuN[CH₂CH(Me)O-][CH(Me)CH₂O-], BuN[CH₂C(Me)₂O-]₂, BuN[CH₂C(Me)₂O-][C(Me)₂CH₂O-], BuN[CH₂C(=O)O-]₂, HexN[CH₂CH₂O-]₂, HexN[CH₂CH(Me)O-]₂, HexN[CH₂CH(Me)O-][CH(Me)CH₂O-], HexN[CH₂C(Me)₂O-]₂, HexN[CH₂C(Me)₂O-][C(Me)₂CH₂O-], HexN[CH₂C(=O)O-]₂, OctN[CH₂CH₂O-]₂, OctN[CH₂CH(Me)O-]₂, OctN[CH₂CH(Me)O-][CH(Me)CH₂O-], OctN[CH₂C(Me)₂O-]₂, OctN[CH₂C(Me)₂O-][C(Me)₂CH₂O-], OctN[CH₂C(=O)O-]₂, wobei Pr, Bu, Hex und Oct für alle isomeren Propyl-, Butyl- sowie Octylreste stehen können, PhN[CH₂CH₂O-]₂, PhN[CH₂CH(Me)O-]₂, PhN[CH₂CH(Me)O-][CH(Me)CH₂O-], PhN[CH₂C(Me)₂O-]₂, PhN[CH₂C(Me)₂O-][C(Me)₂CH₂O-], PhN[CH₂C(=O)O-]₂,

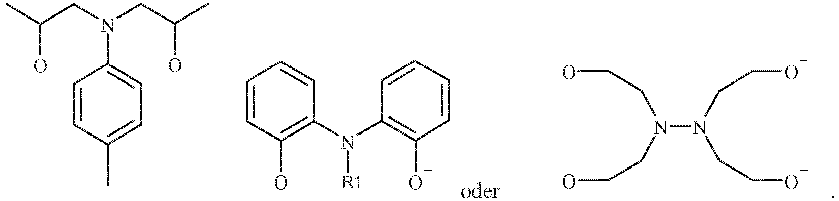

Die Zinnverbindungen - wie dem Fachmann bekannt ist - neigen zur Oligomerisierung, so dass häufig mehrkernige Zinnverbindungen oder Gemische aus ein- und mehrkernigen Zinnverbindungen vorliegen. In den mehrkernigen Zinnverbindungen sind die Zinnatome bevorzugt über Sauerstoffatome (,Sauerstoffbrücken', *vide intra*) miteinander verbunden. Typische oligomere Komplexe (mehrkernige Zinnverbindungen) entstehen z.B. durch Kondensation der Zinnatome über Sauerstoff oder Schwefel, z.B. 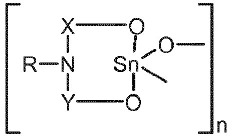 mit n > 1 (vgl. Formel II). Bei niedrigen Oligomerisierungsgraden findet man häufig cyclische, bei höheren Oligomerisierungsgraden lineare Oligomere mit OH- bzw. SH-Endgruppen (vgl. Formel III).

### Füllstoff D

Der Füllstoff D ist ein organischer oder anorganischer Füllstoff. Er kann jede dem Fachmann bekannte und zur Herstellung von Verbundwerkstoffen geeignete Geometrie aufweisen.

In einer bevorzugten Ausführungsform der Erfindung ist der Füllstoff insbesondere ein partikulärer Füllstoff mit einer Polydispersität von höchstens 50, bevorzugt höchstens 30 und ganz besonders bevorzugt höchstens10 mit einem mittleren Korndurchmesser von höchstens 0,1 mm und bevorzugt höchstens 0,05 mm.

In einer weiteren besonders bevorzugten Ausführungsform werden Füllstoffe mit einem Aspektverhältnis von wenigstens 1000 verwendet.

In einer weiteren besonders bevorzugten Ausführungsform werde partikuläre Füllstoffe und Füllstoffe mit einem Aspektverhältnis von wenigstens 1000 in einem Gewichtsverhältnis von 1:100 bis 100:1 eingesetzt bevorzugt 1:80 bis 50:1 und besonders bevorzugt 1:50 und 20:1.

In einer besonders bevorzugten Ausführungsform der vorliegenden Erfindung enthält die polymerisierbare Zusammensetzung wenigstens einen organischen Füllstoff D1 und / oder wenigstens einen anorganischen Füllstoff D2. Besagte Füllstoffe können in jeder dem Fachmann bekannten Form und Größe, insbesondere in den oben genannten Formen und Größen, vorliegen. Die Füllstoffe sind in einer bevorzugten Ausführungsform vorwiegend anorganischer Natur, bevorzugt auf Basis von (Halb)Metallsalzen und (Halb)Metalloxiden.

Bevorzugte organische Füllstoffe D1 sind Holz, Zellstoff, Papier, Pappe, Gewebeschnitzel, Kork, Weizenspreu, Polydextrose, Cellulose, Aramide, Polyethylen, Kohlenstoff, Kohlenstoffnanoröhrchen, Polyester, Nylon, Plexiglas, Flachs, Hanf und Sisal.

Bevorzugte anorganische Füllstoffe D2 sind AlOH₃, CaCO₃, Siliziumdioxid, Magnesiumcarbonat, TiO₂, ZnS, Mineralien enthaltend Silikate, Sulfate, Carbonate und Ähnliches wie Magnesit, Baryt, Glimmer, Dolomit, Kaolin, Talk, Tonmineralien, sowie Ruß, Graphit, Bornitrid, Glas, Basalt, Bor, Keramik und Kieselsäure.

Die erfindungsgemäße polymerisierbare Zusammensetzung ist vorzugsweise zur Herstellung eines hochgefüllten Verbundwerkstoffs geeignet. "Hochgefüllt" bedeutet dass Füllstoffgehalte bis zu 50 Gew-% bis 80 Gew.-%, bevorzugt 60 bis 80 Gew.-% erreicht werden können.

In einer besonders bevorzugten Ausführungsform ist der Füllstoff ein faserförmiger Füllstoff D3. Der faserförmige Füllstoff D3 kann aus allen dem Fachmann bekannten anorganischen Fasern, organischen Fasern, Naturfasern oder deren Mischungen hergestellt sein. Dass ein faserförmiger Füllstoff aus einem Material oder einer Mischung verschiedener Materialien hergestellt ist, schließt nicht aus, dass er weitere Stoffe enthält, die z.B. als Schlichten dienen.

Bevorzugte anorganische Fasern sind Glasfasern, Basaltfasern, Borfasern, Keramikfasern, Whisker, Kieselsäurefasern sowie metallische Verstärkungsfasern. Bevorzugte organische Fasern sind Aramidfasern, Kohlenstofffasern, Kohlenstoffnanoröhrchen, Polyester-Fasern, Nylon-Fasern sowie Plexiglas-Fasern. Bevorzugte Naturfasern sind Flachs-Fasern, Hanf-Fasern, Holzfasern, Cellulosefasern sowie Sisalfasern.

Als faserförmige Füllstoffe D3 sind erfindungsgemäß alle Fasern geeignet, deren Aspektverhältnis, größer 1000, bevorzugt größer 5000, stärker bevorzugt größer 10.000 und am stärksten bevorzugt größer 50.000 ist. Das Aspektverhältnis ist definiert als die Länge der Faser geteilt durch den Durchmesser.

Die faserförmigen Füllstoffe D3 weisen bei Einhaltung des oben definierten Aspektverhältnisses bevorzugt eine Mindestlänge von 1 m, besonders bevorzugt 50 m und ganz besonders bevorzugt 100 m auf.

Gemäß einer bevorzugten Ausführungsform der Erfindung ist der faserförmige Füllstoff D3 ausgewählt aus der Gruppe bestehend aus Glasfasern, Basaltfasern, Kohlenstofffasern und Mischungen daraus. Die Fasern können einzeln vorliegen, sie können aber auch in jeder dem Fachmann bekannten Form zu Matten oder Fliesen gewebt oder gewirkt vorliegen. Vorzugsweise liegen weniger als 50 Gew.-%, stärker bevorzugt weniger als 35 Gew.-%, noch stärker bevorzugt weniger als 20 Gew.-% uns am stärksten bevorzugt weniger als 10 Gew.-% der verwendeten Fasern in Form von Matten oder Fliesen vor.

Die einzelnen Fasern haben vorzugsweise einen Durchmesser von weniger 0,1 mm, stärker bevorzugt weniger 0,05 mm, und noch stärker bevorzugt weniger 0,03 mm.

Gemäß einer bevorzugten Ausführungsform der Erfindung befindet sich auf der Oberfläche der Fasern eine Schlichte. Die Schlichte ist ein dünner Polymerfilm, der häufig reaktive Gruppen enthält und die Benetzung mit dem Harz bzw. die Anbindung zwischen der Matrix und der Faser verbessert.

Gemäß einer weiteren Ausführungsform der Erfindung zeigen die verwendeten Fasern einen geringen Wassergehalt. Wasser kann zum Beispiel auf der Oberfläche der Fasern absorbiert sein und später mit dem Isocyanatgruppen unerwünschte Nebenreaktionen eingehen. Es hat sich daher als vorteilhaft erwiesen, wenn der Wassergehalt der Fasern geringer 5 Gew.-%, bevorzugt geringer 3 Gew.-%, stärker bevorzugt geringer 2 Gew.-%, insbesondere geringer 1 Gew.-% und am stärksten bevorzugt geringer 0,5 Gew.-% bezogen auf das Gesamtgewicht an Fasern ist. Am besten haben die Fasern keinen Feuchtegehalt. Dies kann gegebenenfalls durch eine Trocknung der Fasern erreicht werden. Der Feuchtegehalt der Fasern kann durch gravimetrisches Messen vor und nach der Trocknung, vorzugsweise bei 120 °C für 2 Stunden, bestimmt werden.

In einer bevorzugten Ausführungsform der vorliegenden Erfindung sind wenigstens 50 %, stärker bevorzugt wenigstens 70 %, noch stärker bevorzugt wenigstens 80 % und ganz besonders bevorzugt wenigstens 90 % der Fasern parallel zueinander orientiert. Fasern sind parallel zueinander orientiert, wenn der Winkel zwischen ihnen weniger als 15 Grad, bevorzugt weniger als 10 Grad und noch stärker bevorzugt weniger als 5 Grad betrachtet auf einer Länge von 0,5 m, bevorzugt 1 m und besonders bevorzugt 2 m beträgt. Ganz besonders bevorzugt beträgt der Winkel zwischen wenigstens 90 % der Fasern auf einer Länge von 2 m höchstens 10 Grad und noch stärker bevorzugt höchstens 5 Grad. Dem Fachmann ist bewusst, dass die vorgenannten Angaben nur bei der Verwendung einzelner Fasern sinnvoll sind. Soweit die verwendeten Fasern in Form von Matten oder Vliesen vorliegen, ergibt es sich aus der Anordnung der Fasern in diesen Materialien, dass diese Bedingungen nicht eingehalten werden können.

Das Verhältnis zwischen dem reaktiven Harz, dem faserförmigen Füllstoff D3 und allen weiteren Bestandteilen des Verbundwerkstoffs wird vorzugsweise so gewählt, dass der Fasergehalt wenigstens 30 Gew.-%, bevorzugt 45 Gew.-%, stärker bevorzugt wenigstens 50 Gew.-%, noch stärker bevorzugt wenigstens 60 Gew.-% des ausgehärteten Verbundwerkstoffs beträgt.

### Katalysator E

Wenn im Reaktionsgemisch hohe molare Verhältnisse von Isocyanatgruppen zu Hydroxylgruppen vorliegen, ist die zusätzliche Verwendung eines Katalysators bevorzugt, der die Vernetzung von Isocyanatgruppen zu Isocyanuratgruppen katalysiert. Dies gilt insbesondere für Reaktionsgemische mit einem molaren Verhältnis von Isocyanatgruppen zu Hydroxylgruppen von wenigstens 3 : 1, stärker bevorzugt von wenigstens 5 : 1.

Geeignete Katalysatoren sind in WO 2018/054776, EP 18167251.0 und EP 18167245.2 beschrieben. Bevorzugt handelt es sich um einen der in EP 18167245.2 beschriebenen Katalysatoren oder um eine Mischung aus Kaliumacetat und Polyethylenglykol. Das Polyethylenglykol hat vorzugsweise ein zahlenmittleres Molekulargewicht zwischen 300 und 600 g/mol.

### Reaktionsgemisch

Das Vermischen der Komponenten A, B und C kann auf jede dem Fachmann bekannte Art und Weise erfolgen. Hierdurch entsteht ein Reaktionsgemisch. D.h. durch Erhöhung der Temperatur des Gemisches kann eine Vernetzungsreaktion der in diesem Gemisch enthaltenen Komponenten gestartet werden, die zur Bildung eines Polyurethans aus den Komponenten A und B führt. Da der Katalysator C bei Raumtemperatur weitgehend inaktiv ist, verläuft die Vernetzungsreaktion ohne Temperaturerhöhung nur langsam. Dies ermöglicht eine Lagerung des anwendungsfertigen Reaktionsgemisches für mehrere Stunden, ohne dass die Viskosität auf Werte ansteigt, die eine weitere Verarbeitung unmöglich machen. Zwischen den Verfahrensschritten a) und b) kann deswegen ein längerer Zeitraum liegen. Gleichzeitig ermöglicht der Katalysator C aber nach entsprechender Temperaturerhöhung eine sehr schnelle Vernetzung der Komponenten A und B im Zeitraum von höchstens 20 Minuten, bevorzugt höchstens 15 Minuten, weiter bevorzugt höchstens 10 Minuten, besonders bevorzugt höchstens 5 Minuten und ganz besonders bevorzugt höchstens 3 Minuten.

Für viele Anwendungen ist diese Kombination aus langer Topfzeit und gezielt ausgelöster schneller Vernetzung ein entscheidendes Kriterium. So werden beispielsweise bei der Fertigung von Verbundwerkstoffen durch Pultrusion Endlosfasern durch ein Tauchbad mit flüssigem Matrixmaterial gezogen und anschließend in einem erhitzten Werkzeug zu einem Profil ausgehärtet. Hierbei ist es wichtig, dass das Reaktionsgemisch im Tauchbad möglichst lange flüssig bleibt, um lange Laufzeiten der Fertigung zu ermöglichen. Gleichzeitig erfordert ein effizienter Produktionsprozess eine schnelle Härtung.

### Topfzeit

Unter "Topfzeit" wird in der vorliegenden Anmeldung der Zeitraum verstanden, in dem die Viskosität des Reaktionsgemisches um 200 %, d.h. auf das Dreifache des Ausgangswertes ansteigt. Sie liegt vorzugsweise bei wenigstens 8 Stunden, stärker bevorzugt bei wenigstens 4 Stunden, noch stärker bevorzugt bei wenigstens 2 Stunden und am stärksten bevorzugt bei wenigstens 1 Stunde wenn das Reaktionsgemisch bei einer Temperatur von höchstens 50 °C gelagert wird.

Basierend auf den oben genannten Topfzeiten enthält das erfindungsgemäße Verfahren zwischen den Verfahrensschritten a) und b) einen weiteren Verfahrensschritt, in dem das in Verfahrensschritt a) erhaltene Reaktionsgemisch für 1 Minuten bis 8 Stunden, bevorzugt 5 Minuten bis 6 Stunden, noch stärker bevorzugt 15 Minuten bis 6 Stunden und am stärksten bevorzugt 30 Minuten bis 4 Stunden bei einer Temperatur von höchstens 50 °C gelagert wird.

### Benetzen eines Füllstoffs mit dem Reaktionsgemisch

In Verfahrensschritt b) wird das in Verfahrensschritt a) erhaltene Reaktionsgemisch so mit dem Füllstoff D vermischt, dass der Füllstoff D möglichst vollständig benetzt wird. Hierdurch wird eine möglichst gute Haftung der aus den Komponenten A und B entstehenden Polymermatrix am Füllstoff D erreicht. Dies ist für die Kraftübertragung von der Polymermatrix auf den Füllstoff und damit für die mechanischen Eigenschaften des entstehenden Verbundwerkstoffs wichtig.

Somit sind erfindungsgemäß alle bekannten Verfahren geeignet, die eine gute Benetzung des Füllstoffs mit dem Reaktionsgemisch ermöglichen. Genannt seien hier ohne Anspruch auf Vollständigkeit: Rakelverfahren, Tauchbadverfahren, Injektionsboxverfahren, Sprühverfahren, Harzinjektionsverfahren, Harzinfusionsverfahren mit Vakuum oder Druck, Auftragsverfahren mittels Walze, Rolle und Handlaminationsverfahren.

Wenn es sich um einen faserförmigen Füllstoff D3 handelt, wird gemäß einer besonders bevorzugten Ausführungsform der Erfindung das Tauchbadverfahren verwendet. Dabei werden die trockenen Fasern durch ein offenes Harzbad gezogen, wobei die Umlenkung der Fasern über Führungsblenden in und aus dem Harzbad erfolgt (Wannenverfahren). Alternativ dazu können die Fasern auch ohne Umlenkung gerade durch die Imprägniervorrichtung gezogen werden (Durchziehverfahren).

Gemäß einer weiteren besonders bevorzugten Ausführungsform der Erfindung wird bei einem faserförmigen Füllstoff D3 die Injektionsbox verwendet. Bei der Injektionsbox werden die Fasern ohne Umlenkung in die Imprägniereinheit eingezogen, die bereits die Form des späteren Profils aufweist. Mittels Druck wird die reaktive Harzmischung in die Box, bevorzugt transversal zur Faserrichtung, gepumpt.

Es hat sich als vorteilhaft erwiesen, wenn die Fasern eines faserförmigen Füllstoffs D3, die in Form von Faserbündeln, sogenannten rovings, vorliegen, vor dem Tränkungsschritt gespreizt werden, um eine bessere Imprägnierung der Einzelfasern zu erreichen. Dies kann beispielhaft durch Umlenkung an Umlenkrollen oder Führungsblenden erreicht werden.

Wenn faserförmige Füllstoffe D3 verarbeitet werden, ist das erfindungsgemäße Verfahren vorzugsweise ein Pultrusionsverfahren, bei dem der Verfahrensschritt b) wie oben beschrieben als Tauchbadverfahren oder in einer Injektionsbox durchgeführt wird und der Verfahrensschritt c) dadurch durchgeführt wird, dass die benetzten Fasern des Füllstoffs durch ein beheiztes Werkzeug gezogen, dessen Profil dem Profil des herzustellenden Werkstücks entspricht. Hierbei verstreichen zwischen des Verfahrensschritten b) und c) vorzugsweise höchstens 20 Minuten, stärker bevorzugt höchstens 300 Sekunden und am stärksten bevorzugt höchstens 120 Sekunden.

### Aushärten

Das Aushärten des Reaktionsgemisches in Verfahrensschritt c) erfolgt durch die Vernetzung der darin enthaltenen Hydroxyl- und Isocyanatgruppen zu Urethangruppen. Soweit ein Überschuss von Isocyanatgruppen über gegenüber Isocyanat reaktiven Gruppen vorliegt, wird im Zuge der Aushärtung auch wenigstens eine Struktur ausgewählt aus der Gruppe bestehend aus Uretdion-, Isocyanurat-, Allophanat-, Biuret-, Iminooxadiazindion- und Oxadiazintrionstrukturen gebildet. Besonders bevorzugt ist die Ausbildung von Isocyanurat- und oder Allophanatgruppen zusätzlich zu Urethangruppen.

Da der Katalysator C thermolatent ist wie oben definiert, läuft die Vernetzungsreaktion bei Temperaturen unter 60 °C nur äußerst langsam ab. Eine schnelle und effiziente Vernetzung erfordert in Verfahrensschritt c) die Anhebung der Temperatur auf wenigstens 120°C besonders bevorzugt wenigstens 180 °C. Um Schäden am entstehenden Werkstück zu vermeiden sollte die Temperatur hierbei aber 280 °C, bevorzugt 250°C und besonders bevorzugt 220 °C nicht überschreiten.

Bei den oben genannten Temperaturen wird die Aushärtung in Verfahrensschritt c) in weniger als 15 Minuten, bevorzugt weniger als 10 Minuten und stärker bevorzugt weniger als 5 Minuten weitgehend abgeschlossen. Besonders bevorzugt ist eine weitgehend vollständige Aushärtung in weniger als 5 Minuten bei über diesen Zeitraum gemittelten Temperaturen zwischen 180 °C und 220 °C.

Die Aushärtung ist weitgehend abgeschlossen, wenn nur noch höchstens 30 %, bevorzugt höchstens 20 %, stärker bevorzugt höchstens 15 % und am stärksten bevorzugt höchstens 10 % der zu Beginn des Verfahrensschritts c) vorliegenden freien Isocyanatgruppen im Reaktionsgemisch vorliegen. Dies kann durch den Vergleich der Intensität der Isocyanatbande bei ca. 2270 cm-1 mittels IR-Spektroskopie erfolgen.

In einer besonderen Ausführungsform können Rest-Bestandteile von Isocyanat nach Abschluss des Verfahrensschritts c) über Lagern und / oder Tempern auf Temperaturen von wenigstens 50 °C und höchstens 200 °C noch weiter reduziert werden. Dies geschieht vorzugsweise räumlich getrennt von der Pultrusionsanlage.

In einer weiteren Ausführungsform betrifft die vorliegende Erfindung einen Verbundwerkstoff, der durch das oben beschriebene, erfindungsgemäße Verfahren erhalten werden kann.

Die erfindungsgemäß erhältlichen Verbundwerkstoffe haben, wenn nicht durch Pigmente oder Füllstoffe anders vorgegeben, einen Farbwert L der vernetzten Polymermatrix von höchstens 30, bevorzugt höchstens 20 und besonders bevorzugt höchstens 10 gemessen im CIELAB **L^{∗}a^{∗}b-**Farbsystem, mittels üblicher Farbmessgeräte.

Die folgenden Ausführungsbeispiele dienen nur dazu, die Erfindung zu illustrieren. Sie sollen den Schutzbereich der Patentansprüche in keiner Weise beschränken.

### Beispiele

### Allgemeine Angaben

In den Beispielen sind alle Prozentangaben, soweit nicht anders vermerkt, als Gewichtsprozent zu verstehen.

Die zur Zeit der Versuchsdurchführung herrschende Umgebungstemperatur von 23 °C wird als RT (Raumtemperatur) bezeichnet.

### Messmethoden

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Phasenübergänge mittels DSC

Die Phasenübergänge wurde mittels DSC (Differential Scanning Calorimetry) mit einem Mettler DSC 12E (Mettler Toledo GmbH, Gießen, DE) entsprechend DIN EN 61006 bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 320 K/min. Die Kühlung erfolgte durch flüssigen Stickstoff. Als Spülgas wurde Stickstoff verwendet. Die angegebenen Werte basieren jeweils auf der Auswertung der 1. Aufheizkurve, da bei den untersuchten Reaktivsystemen durch die Temperaturbelastung in der DSC Veränderungen der Probe im Messprozess bei hohen Temperaturen möglich sind. Die Schmelztemperaturen Tm wurden aus den Temperaturen an den Maxima der Wärmeflusskurven erhalten. Die Glasübergangstemperatur Tg wurde aus der Temperatur bei der halben Höhe einer Glasübergangsstufe erhalten.

### Bestimmung von Infrarotspektren

Die Infrarotspektren wurden an einem mit einer ATR-Einheit ausgerüstetem FT-IR-Spektrometer der Firma Bruker gemessen.

### Bestimmung der Viskosität/Topfzeit

Die Viskosität einer kleinen Menge des reaktiven Harzmischung (einschließlich des zugegebenen Katalysators) wurde bei 23 °C mit einem Physica MCR 51 der Firma Anton Paar (Platte/ Platte; Scherrate 1s-1), wenn nicht anders angegeben, über 4 h gemessen. Die Topfzeit war die Zeit, in der sich die Anfangsviskosität der Probe verdreifacht hat.

### Durchführung der Zugversuche

Die Messungen zu den Zugversuchen wurden nach Standard DIN EN ISO 527 durchgeführt.

### Durchführung der Biegeversuche

Die Messungen zu den Biegeversuchen wurden nach Standard DIN EN ISO 14125 durchgeführt.

### Durchführung der Charpy Schlagzähigkeit:

Die Messungen zur Charpy Schlagzähigkeit wurden nach Standard DIN EN ISO 179 durchgeführt.

### Bestimmung der interlaminaren Scherkraft

Die interlaminaren Scherversuche wurden nach Standard DIN EN ISO 14130 durchgeführt.

### Durchführung der Messung des Fasergehaltes

Der Fasergehalt der Proben wurde nach Standard DIN EN ISO 1172 Verfahren A bestimmt.

### Ausgangsverbindungen

Polyisocyanat A1: Desmodur^{®} N 3600 ist ein HDI-Trimerisat (NCO-Funktionalität >3) mit einem NCO-Gehalt von 23,0 Gew.-% von der Fa. Covestro AG. Die Viskosität beträgt ca. 1200 mPas bei 23°C (DIN EN ISO 3219/A.3).

Polyethylenglycol (PEG) 400 wurde mit einer Reinheit von > 99 Gew.-% von der Fa. ACROS bezogen.

Kaliumacetat wurde mit einer Reinheit von > 99 Gew.-% von der Fa. ACROS bezogen.

Glycerin wurde mit einer Reinheit von > 99 Gew.-% von der Fa. ACROS bezogen.

Dibutylzinndilaurat (DBTL) wurde mit einer Reinheit von 95 Gew.-% von der Fa. Sigma-Aldrich bezogen.

Das Trennmittel INT-1940 RTM wurde von der Firma AXEL PLASTICS bezogen.

Alle Rohstoffe mit Ausnahme des Katalysators wurden vor Verwendung im Vakuum entgast, das Polyethylenglycol sowie das Glycerin zusätzlich getrocknet.

Die Kurzglasfaser mit der Bezeichnung 910A-10P wurde von der Fa. Owens Corning geliefert und lag in ca 4,5 mm langen Bündeln vor. Der Durchmesser der einzelnen Fasern betrug 0,01 mm.

### Herstellung der latenten Katalysatoren zur Urethanbildung

Die Katalysatoren aus Tabelle 1 (außer K1) wurden nach Standard-Literaturvorschriften erhalten (vgl. Chem. Heterocycl. Comp. 2007 43 813-834 und darin zitierte Literatur)

**Tabelle 1:**

| Kat. | IUPAC-Name | Summenformel | Molmasse | Zinngehalt |
|---|---|---|---|---|
| K1 | Dibutylzinndilaurat | C₃₂H₆₄O₄Sn | 631.56 | 18.80 |
| K2 | 2,2-Dichloro-6-methyl-1,3,6,2-dioxazastannocane | C₅H₁₁Cl₂NO₂Sn | 306.76 | 38.70 |
| K3 | 4,12-Dibutyl-1,7,9,15-tetraoxa-4,12-diaza-8-stannaspiro[7.7]pentadecan | C₁₆H₃₄N₂O₄Sn | 437.16 | 27.15 |
| K4 | 4,12-Dibutyl-2,6,10,14-tetramethyl-1,7,9,15-tetraoxa-4,12-diaza-8-stannaspiro[7.7]pentadecan | C₂₀H₄₂N₂O₄Sn | 493.27 | 24.07 |
| K5 | 2,2,6,6,10,10,14,14-Octamethyl-4,12-dimethyl-1,7,9,15-tetraoxa-4,12-diaza-8-stannaspiro[7.7]pentadecan | C₁₈H₃₈N₂O₄Sn | 465.22 | 25.52 |
| K6 | 4,12-Dibutyl-2,2,6,6,10,10,14,14-octamethyl-1,7,9,15-tetraoxa-4,12-diaza-8-stannaspiro[7.7]pentadecan | C₂₄H₅ₒN₂O₄Sn | 549.37 | 21.61 |
| K7 | 2,2,6,6,10,10,14,14-Octamethyl-4,12-dioctyl-1,7,9,15-tetraoxa-4,12-diaza-8-stannaspiro[7.7]pentadecan | C₃₂H₆₆N₂O₄Sn | 661.59 | 17.94 |

### Herstellung der Glycerin-Katalysatorlösungen zur Urethanbildung (KL1)

Die latenten Katalysatoren (K2-7) wurden in entsprechende Mengen zu 50 g Glycerin gegeben und für 2 bis 240 min in einem auf 50 °C temperierten Ultraschallbad bis zur vollständigen Lösung belassen, so dass man Katalysatorlösungen mit einem Sn-Gehalt von ^{∼}7000 ppm erhielt. Diese wurden ohne Zugabe von weiterem Glycerin gleichzeitig als Katalysator- und Polyolkomponenten in der Herstellung der Reaktionsmischungen verarbeitet.

### Herstellung der PEG-Katalysatorlösung zur Isocyanuratbildung (KL2)

Kaliumacetat (5,0 g) wurde in PEG 400 (95,0 g) bei RT solange gerührt, bis alles gelöst war. Es wurde so eine 5 Gew.-% Lösung von Kaliumacetat in PEG 400 erhalten und ohne weitere Behandlung als Trimerisierungskatalysator eingesetzt.

### Herstellung der DBTL-Lösung zur Urethanbildung (KL3, vgl.)

5 g DBTL wurden zu 495 g Polyisocyanat A1 gegeben und unter Rühren gelöst. Man erhielt eine 1%ige Katalysatorlösung, welche ohne Weiterbehandlung zur Herstellung der Reaktionsmischungen eingesetzt wurde.

### Herstellung der Reaktionsmischungen

Die Reaktionsmischung wurde, wenn nicht anders angegeben, durch Vermischen von Polyisocyanat A1 mit einer der Zielkennzahl entsprechenden Menge Katalysatorlösung (KL1-3) oder einer entsprechenden Menge Glycerin in Verbindung mit einer entsprechenden Menge KL1 bei 23 °C in einem Speedmixer DAC 150.1 FVZ der Fa. Hauschild bei 2750 min-1 hergestellt. Diese wurde dann entweder ohne weitere Behandlung zur Vernetzung in eine geeignete Form gegossen, oder zur weiteren Verarbeitung (Kompositherstellung) zu einer entsprechenden Menge Kurzglasfasern gegeben.

### Aushärten der Reaktionsmischung:

**Tabelle 2:**

| Bsp. | Harzzusammensetzung | | | | Katalysatorlösung 1 | | | | Katalysatorlösung 2 | | Materialeigenschaften | | |
|---|---|---|---|---|---|---|---|---|---|---|---|---|---|
| | Menge Polyiso -cyanat A1 [g] | Menge Glyceri n [g] | Kenn -zahl | Vernetzungs art | Kat. | Kat.-Lösung | Menge [g] | Sn-Gehalt [ppm] | Typ | Men ge [g] | Topfzeit bei RT | Tg nach Aus-härtung | Erscheinung nach Aushärtung |
| **1 (vgl.)** | 41.675 | 7.010 | 100 | PUR | K1 | KL3 | 0.65 | 1880 | / | / | < 1 h | 84 | klar, farblos |
| 2 (erf.) | 41.630 | / | 100 | PUR | K2 | KL1 | 7.065 | 6980 | / | / | > 4 h | 86 | klar, gelblich |
| 3 (erf.) | 41.630 | / | 100 | PUR | K3 | KL1 | 7.119 | 6990 | / | / | > 4 h | 77 | trüb, weiß |
| 4 (erf.) | 41.630 | / | 100 | PUR | K4 | KL1 | 6.940 | 7000 | / | / | > 4 h | 82 | klar, farblos |
| 5 (erf.) | 41.630 | / | 100 | PUR | K5 | KL1 | 7.127 | 6890 | / | / | > 4 h | 81 | klar, gelb |
| 6 (erf.) | 41.630 | / | 100 | PUR | K6 | KL1 | 7.164 | 7000 | / | / | > 4 h | 82 | trüb, gelblich |
| 7 (erf.) | 41.630 | / | 100 | PUR | K6 | KL1 | 7.210 | 7000 | / | / | > 4 h | 66 | klar, farblos |
| 8 (erf.) | 200 | / | 200 | PUR/ PIR | K4 | KL1 | 16.67 | 7000 | KL2 | 4.3 | > 4 h | 75 | trüb, weiß |
| 9 (erf.) | 400 | / | 400 | PUR/ PIR | K4 | KL1 | 16.67 | 7000 | KL2 | 12.9 | > 4 h | 88 | trüb, gelblich |
| 10 (erf.) | 600 | / | 600 | PUR/ PIR | K4 | KL1 | 16.67 | 7000 | KL2 | 21.4 | > 4 h | 109 | klar, bräunlich |
| 11 (erf.) | 800 | / | 800 | PUR/ PIR | K4 | KL1 | 16.67 | 7000 | KL2 | 30 | > 4 h | 99 | klar, braun |
| **12 (vgl.)** | 200 | 16.78 | 200 | PUR/ PIR | K1 | KL3 | 1.76 | 1880 | KL2 | 4.3 | < 1 h | 92 | trüb, weiß |
| 13 **(vgl.)** | 400 | 16.78 | 400 | PUR/ PIR | K1 | KL3 | 1.76 | 1880 | KL2 | 12.9 | < 2 h | 100 | trüb, gelblich |
| **14 (vgl.)** | 600 | 16.78 | 600 | PUR/ PIR | K1 | KL3 | 1.76 | 1880 | KL2 | 21.4 | < 1.5 h | 104 | klar, gelb |
| **15 (vgl.)** | 800 | 16.78 | 800 | PUR/ PIR | K1 | KL3 | 1.76 | 1880 | KL2 | 30 | < 2 h | 104 | klar, braun |

### Vergleichsbeispiel 1

Die in Tabelle 2 angegebenen Mengen von Polyisocyanat A1, Glycerin und Katalysatorlösung KL3 wurden laut der o.g. Herstellvorschrift für Reaktionsmischungen behandelt. Die Aushärtung wurde anschließend im Ofen während 3 min bei 220 °C durchgeführt.

Der Tg der ausgehärteten Reaktionsmischung betrug 84 °C. Die Viskosität der Reaktionsmischung betrug direkt nach dem Herstellen der Mischung 1.9 Pa^{∗}s und stieg während der 4 h-Messung bei RT exponentiell an. Die Topfzeit betrug < 50 min.

### Ausführungsbeispiele 2 bis 7

Die in Tabelle 2 angegebenen Mengen von Polyisocyanat A1 und Katalysatorlösung KL1 wurden laut der o.g. Herstellvorschrift für Reaktionsmischungen behandelt. Die Aushärtung wurde anschließend im Ofen während 3 min bei 220 °C durchgeführt.

Die Tg der ausgehärteten Reaktionsmischungen lagen zwischen 66 und 86 °C. Die Viskosität der Reaktionsmischungen betrug direkt nach dem Herstellen der Mischung 1.7 Pa^{∗}s und veränderte sich während der 4 h-Messung bei RT um maximal 0.3 Pa^{∗}s. Die Topfzeit betrug daher > 240 min.

### Ausführungsbeispiele 8 bis 11

Die in Tabelle 2 angegebenen Mengen von Polyisocyanat A1 und Katalysatorlösungen KL1 und KL2 wurden laut der o.g. Herstellvorschrift für Reaktionsmischungen behandelt. Die Aushärtung wurde anschließend im Ofen während 3 min bei 220 °C durchgeführt.

Die Tg der ausgehärteten Reaktionsmischungen lagen zwischen 75 und 109 °C. Die Viskosität der Reaktionsmischungen betrug direkt nach dem Herstellen der Mischung ^{∼}1.4 Pa^{∗}s und veränderte sich während der 4 h-Messung bei RT um maximal 0.3 Pa^{∗}s. Die Topfzeit betrug daher > 240 min.

### Vergleichsbeispiele 12 bis 15

Die in Tabelle 2 angegebenen Mengen von Polyisocyanat A1, Glycerin und Katalysatorlösungen KL3 wurden laut der o.g. Herstellvorschrift für Reaktionsmischungen behandelt. Die Aushärtung wurde anschließend im Ofen während 3 min bei 220 °C durchgeführt.

Die Tg der ausgehärteten Reaktionsmischungen lagen zwischen 92 und 104 °C. Die Viskosität der Reaktionsmischungen betrug direkt nach dem Herstellen der Mischung ^{∼}2 Pa^{∗}s und stieg während der 4 h-Messung bei RT exponentiell an. Die Topfzeit betrug daher < 240 min.

### Herstellung von Polyurethankompositen

Polyurethankomposite werden durch Vermischen von 10 g Glasfasern (in Chops mit ca. 4.5 mm Länge) mit 40 g der entsprechenden Reaktionsmischung und anschließendem Aushärten der Reaktionsmischung in einer Aluminiumform erhalten.

### Ausführungsbeispiele 16 bis 25

Die Reaktionsmischungen für Polyurethankomposite wurden nach den in Tabelle 2 angegebenen Mischungsverhältnissen aus Bsp. 2-11 hergestellt. Die Komposite wurden wie oben beschrieben hergestellt. Alle Proben zeigten eine äußerst gute Benetzung der Glasfasern, sowie eine signifikante Entfärbung verglichen mit den Proben aus den Aushärtungen ohne Glasfasern. Diese Entfärbung ist auf eine Neutralisierung der Reaktionswärme aus den Vernetzungsreaktionen durch die Wärmekapazität der Glasfasern zurückzuführen.

### Herstellung von Polyurethankompositen durch Pultrusion

### Herstellung der Reaktionsmischung

Das Polyisocyanat A1 wurde in einem offenen Behälter bei Raumtemperatur vorgelegt und mittels Dispermat^{®} und Dissolverscheibe bei 100 Umdrehungen pro Minute (rpm) gerührt. Anschließend wurde zunächst das Trennmittel zugegeben und die Rührgeschwindigkeit auf 300 rpm erhöht, dann wurden die Katalysatorlösungen und ggf. zusätzliches Glycerin bis zum Erreichen einer Kennzahl von 100 zugegeben. Anschließend wurde weitere 5 min gerührt, so dass eine homogene Mischung entstand. Diese reaktive Harzmischung wurde ohne weitere Behandlung für die Pultrusion verwendet.

### Durchführung der Pultrusionsversuche

Für die Durchführung der Pultrusionsversuche wurde eine Anlage Pultrex Px 500-10 t der Firma Pultrex verwendet. Die Faserbündel lagen in Rollen auf dem Ständer vor und wurden zunächst durch eine Faservorsortierung/ Orientierung (Lochplatte) gezogen, wurden dann mittels Injektionsbox bzw. mittels eines offenen Tränkbads mit Harz bei Raumtemperatur getränkt und anschließend in das erhitzte Werkzeug (Profilblock) eingezogen. Das Werkzeug hatte eine Länge von 1000 mm, über die sich 4 nacheinander geschaltete, gleich große Heizzonen verteilten (H1 bis H4, H1 am Glasfasereinzug). Danach folgte eine luftgekühlte Abkühlungsstrecke von 5 m, an der sich die beiden Puller anschlossen. Diese arbeiteten entsprechend versetzt, so dass eine kontinuierliche Zugkraft an dem Profil anlag und dieses in Richtung Säge transportierte, die nach den Pullern kam und das Profil auf die gewünschte Länge schnitt. Der Profilquerschnitt war ein Rechteck mit den Abmessungen 120 mm x 3 mm.

### Ausführungsbeispiel 26

Es wurde eine Reaktionsmischung aus Polyisocyanat A1 (16,6 kg), Katalysatorlösung KL1 mit dem Katalysator K4 (2,7 kg) und dem Trennmittel INT-1940 RTM (0,6 kg) hergestellt. Die Glasfaserbündel (130 rovings) wurden orientiert und durch ein offenes Tränkbad geleitet, welches mit der Reaktionsmischung befüllt war. Die so mit Harz getränkten Glasfasern wurden direkt in das beheizte Werkzeug eingezogen. Die Temperaturzonen waren H1 = 200 °C, H2 = 220 °C, H3 = 240 °C und H4 = 200 °C. Die Zuggeschwindigkeit betrug 0,5 m/ min. Die Abzugskräfte lagen bei ca. 1 t. Es wurden 20 m Profil hergestellt. Die Topfzeit der Harzmischung betrug > 4 Stunden. Die Messergebnisse mechanischen Untersuchungen an den Profilen sind in Tabelle 3 zusammengefasst.

### Vergleichsbeispiel 27

Es wurde eine Reaktionsmischung aus Polyisocyanat A1 (8,6 kg), Glycerin (1,48 kg), Trennmittel INT-1940 RTM (0,3 kg) und Katalysatorlösung KL3 (0,15 kg) hergestellt. Die Glasfaserbündel (126 rovings) wurden orientiert und in die Injektionsbox geleitet, welche mit dem Werkzeug fest verbunden war und über eine Fensteröffnung an der Oberseite der Box mit der Harzmischung gefüllt wurde. Die so mit Harz getränkten Glasfasern wurden direkt in das beheizte Werkzeug eingezogen. Die Temperaturzonen waren H1 = 180 °C, H2 = 200 °C, H3 = 200 °C und H4 = 180 °C. Die Zuggeschwindigkeit betrug 0,3 m/ min. Die Abzugskräfte lagen bei ca. 1 t. Es wurden 20 m Profil hergestellt. Die Topfzeit der Harzmischung betrug weniger als 1 Stunde, wodurch eine Nutzung des offenen Tränkbades nicht möglich war. Die Messergebnisse mechanischen Untersuchungen an den Profilen sind in Tabelle 3 zusammengefasst.

**Tabelle 3:**

| | | | | Beispiele | |
|---|---|---|---|---|---|
| | | | | Bsp. 26 | Bsp. 27 (vgl.) |
| | Fasergehalt - DIN EN ISO 1172 | | | | |
| | | | % | 83.5 | 80.8 |

| | Zugversuch - DIN EN ISO 527 | | | | |
|---|---|---|---|---|---|
| Zugmodul | | Axial | GPa | 56 | 55 |
| Streckspannung | | | MPa | 960 | 850 |
| Bruchdehnung | | | % | 1.7 | 1.6 |

| | Biegeversuch - DIN EN ISO 14125 | | | | |
|---|---|---|---|---|---|
| Biegemodul | | Axial | GPa | 51 | 48 |
| Biegespannung | | | MPa | 1040 | 1100 |
| Biegedehnung | | | % | 2.3 | 2.5 |
| Biegemodul | | Transversal | GPa | 10 | 10 |
| Biegespannung | | | MPa | 46 | 33 |
| Biegedehnung | | | % | 0.5 | 0.4 |

| | Charpy - DIN EN ISO 179 | | | | |
|---|---|---|---|---|---|
| Kerbschlagzähigkeit | | Axial | kJ/m² | 290 | 350 |
| Kerbschlagarbeit | | | J | 10 | 10.5 |

| | ILSS - DIN EN ISO 14130 | | | | |
|---|---|---|---|---|---|
| | | Axial | MPa | 47 | 40 |
| | | Transversal | MPa | 5.4 | 8.5 |

### Vergleichsbeispiel 28

In Beispiel 28 sollte die Eignung des erfindungsgemäßen Katalysators K4 zur Vernetzung des in US 2015/218375 beschriebenen Reaktionsgemisches überprüft werden.

Eingesetzt wurde das Polyisocyanat A1 wie oben beschrieben zusammen mit dem Epoxidharz Rütapox 0162 der Firma Bakelite GmbH. Dieses basiert auf Bisphenol A und hat einen Epoxidwert zwischen 0,56 und 0,57. Zusätzlich wurden unterschiedliche Mengenanteile Glycerin eingesetzt.

Berechnung des molaren Gehalts an OH-Gruppen:
Die Masse des eingesetzten Glycerins wird durch dessen Molekulargewicht (92 g/mol) geteilt und mit dem Faktor 3 (Anzahl der OH-Gruppen im Molekül) multipliziert.

Berechnung des molaren Gehaltes an NCO-Gruppen:
Die Masse des eingesetzten Polyisocyanats wurde mit des NCO-Gehalt (23 Gew.-%) multipliziert.

Dieser Wert wurde durch das Molekulargewicht der Isocyanatgruppe (42 g/mol) geteilt.

| | Menge Polyisocyanat A1 [g] | NCO [mol] | Menge Glycerin [g] | OH [mol] | NCO: OH | Menge Epoxid [g] | Menge Katalysator K4 [g] |
|---|---|---|---|---|---|---|---|
| 28 A | 90.2 | 0,494 | 0 | 0 | - | 6,4 | 3,3 |
| 28 B | 90.2 | 0,494 | 0,47 | 0,015 | 32,2^{∗} | 6,4 | 3,3 |
| 28 C | 90,2 | 0,494 | 1,2 | 0,039 | 12,6^{∗} | 6,4 | 3,3 |

| | | | | | | | |
|---|---|---|---|---|---|---|---|
| ^{∗}Abweichungen rundungsbedingt | | | | | | | |

Die Komponenten wurden gemischt und für 10 Minuten bei 220 °C inkubiert. Eine Aushärtung konnte nicht erreicht werden. Erst die weitere Zugabe von geschätzt 8 bis 16 g Glycerin zu dem abgekühlten Reaktionsgemisch ermöglichte die Aushärtung nach 5 Minuten bei erneuter Erwärmung auf die vorgenannte Temperatur.

Der Versuch zeigt, dass die erfindungsgemäßen Katalysatoren bei den in US 2015/218375 geforderten molaren Verhältnissen von Isocyanatgruppen zu OH-Gruppen im Bereich von 10 : 1 bis 16 : 1 keine Härtung ermöglichen.

## Patentansprüche

1. Verfahren zur Herstellung eines Verbundwerkstoffs enthaltend die Schritte
a) Vermischen eines Polyisocyanats A, eines Polyols B und eines latenten Katalysators C gemäß einer der Formeln (I), (II) oder (III), 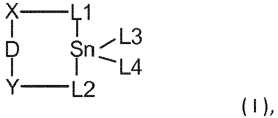 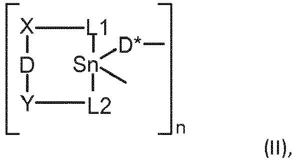 mit n > 1, 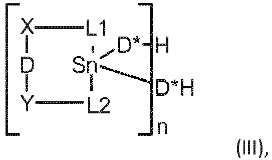 mit n > 1, wobei gilt:
D steht für -O-, -S- oder -N(R1)-
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 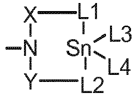 steht, oder R1 und L3 zusammen für -Z-L5- stehen;
D^{∗} steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 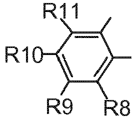 oder 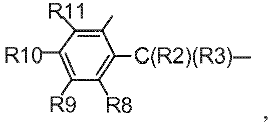 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, - OC(=O)R14, -SR15, -OC(=S)R16, -OS(=O)₂OR17, -OS(=O)₂R18 oder -NR19R20, oder L3 und L4 zusammen stehen für -L1-X-D-Y-L2-,
wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.
b) Benetzen eines Füllstoffs D mit dem in Verfahrensschritt a) erhaltenen Reaktionsgemisch; und
c) Aushärten der in Verfahrensschritt b) erhaltenen Mischung bei einer Temperatur von 120 bis 280 °C in weniger als 30 Minuten, wobei zu Beginn des Verfahrensschrittes c) das stöchiometrische Verhältnis von Isocyanatgruppen des Polyisocyanats A und Hydroxylgruppen des Polyols B im Bereich zwischen 0,7 : 1 und 10 : 1 liegt.

2. Das Verfahren nach Anspruch 1, wobei das in Verfahrensschritt a) erhaltene Reaktionsgemisch vor Durchführung des Verfahrensschritts b) für wenigstens 1 Stunde bei einer Temperatur von höchstens 50 °C gelagert wird und die Viskosität des Reaktionsgemisches in diesem Zeitraum maximal um 200 % ansteigt.

3. Das Verfahren nach Anspruch 1 oder 2, wobei das Polyisocyanat A ausgewählt ist aus der Gruppe bestehend aus aliphatischen Polyisocyanaten und cycloaliphatischen Polyisocyanaten.

4. Das Verfahren nach Anspruch 3, wobei die aliphatischen Polyisocyanate ausgewählt sind aus der Gruppe bestehend aus 1,4-Diisocyanatobutan, 1,5-Diisocyanatopentan ,1,6-Diisocyanatohexan, Isophorondiisocyanat, H₁₂MDI und aus diesen monomeren Isocyanaten aufgebauten oligomeren Polyisocyanaten.

5. Das Verfahren nach einem der Ansprüche 1 bis 4, wobei das Polyol B ausgewählt ist aus der Gruppe bestehend aus Glykol, Glycerin, Propandiol, Butandiol, 1,2,10-Dekantriol, 1,2,8-Oktantriol, 1,2,3-Trihydroxybenzen, 1,1,1-Trimethylolpropan, 1,1,1-Trimethylolethan, Diethylenglycol, Pentaerythritol und Zuckeralkoholen.

6. Das Verfahren nach einem der Ansprüche 1 bis 5, wobei wenigstens 90 mol-% aller zu Beginn des Verfahrensschrittes c) im Reaktionsgemisch enthaltenen mit Isocyanat reaktiven Gruppen Hydroxylgruppen sind.

7. Das Verfahren nach einem der Ansprüche 1 bis 6, wobei das Reaktionsgemisch zusätzlich einen Katalysator E enthält, der die Vernetzung von Isocyanatgruppen zu Isocyanuratgruppen katalysiert, wenn das molare Verhältnis von Isocyanatgruppen zu mit Hydroxylgruppen reaktiven Gruppen im Reaktionsgemisch wenigstens 3 : 1 beträgt..

8. Das Verfahren nach einem der Ansprüche 1 bis 7, wobei zu Beginn des Verfahrensschrittes c) das stöchiometrische Verhältnis von Isocyanatgruppen des Polyisocyanats A und Hydroxylgruppen des Polyols B im Bereich zwischen 0,7 : 1 und 8 : 1 liegt.

9. Das Verfahren nach einem der Ansprüche 1 bis 8, wobei der Füllstoff D ausgewählt ist aus der Gruppe bestehend aus Holz, Zellstoff, Papier, Pappe, Gewebeschnitzel, Kork, Weizenspreu, Polydextrose, Cellulose, Aramide, Polyethylen, Kohlenstoff, Kohlenstoffnanoröhrchen, Polyester, Nylon, Plexiglas, Flachs, Hanf, Sisal, AIOH3, CaCO₃, Siliziumdioxid, Magnesiumcarbonat, TiO₂, ZnS, Mineralien enthaltend Silikate, Sulfaten, Carbonaten, Magnesit, Baryt, Glimmer, Dolomit, Kaolin, Talk, Tonmineralien, Ruß, Graphit, Bornitrid, Glas, Basalt, Bor, Keramik und Kieselsäure.

10. Das Verfahren nach einem der Ansprüche 1 bis 9, wobei der Füllstoffgehalt des in Verfahrensschritt c) aushärtenden Reaktionsgemisches wenigstens 15 Gew.-% beträgt.

11. Das Verfahren nach einem der Ansprüche 1 bis 10, **dadurch gekennzeichnet, dass** es ein Pultrusionsverfahren ist, bei dem ein faserförmiger Füllstoff D3 verwendet wird, der in Verfahrensschritt b) in einem Tauchbad oder in einer Injektionsbox mit dem Reaktionsgemisch aus Verfahrensschritt a) benetzt wird und anschließend in einem beheizten Werkzeug zu einem Profil ausgehärtet wird.

12. Verbundwerkstoff erhältlich nach dem Verfahren gemäß eines der Ansprüche 1 bis 11.

13. Verwendung des Verbundwerkstoffs gemäß Anspruch 12 als Profil.

## Claims

1. Process for producing a composite material comprising the steps of
a) mixing a polyisocyanate A, a polyol B and a latent catalyst C according to any of formulae (I), (II) or (III), 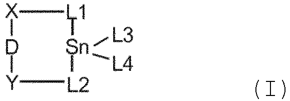 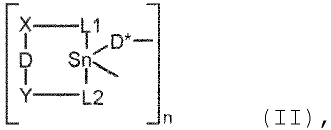 with n>1, 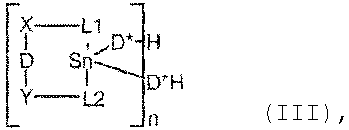 with n>1, wherein:
D represents -O-, -S-, or -N(R1)-
wherein R1 represents a saturated or unsaturated, linear or branched, aliphatic or cycloaliphatic or an optionally substituted, aromatic or araliphatic radical having up to 20 carbon atoms which may optionally comprise heteroatoms from the group of oxygen, sulfur, nitrogen, or represents hydrogen or the radical 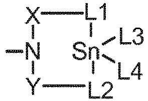
or R1 and L3 together represent -Z-L5-;
D* represents -O- or -S-;
X, Y and Z represent identical or different radicals selected from alkylene radicals of formulae - C(R2)(R3)-, -C(R2)(R3)-C(R4)(R5)- or -C(R2)(R3)-C(R4)(R5)-C(R6)(R7)-
or ortho-arylene radicals of formulae 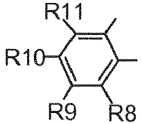 or 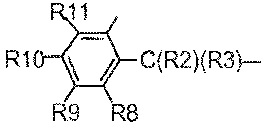
wherein R2 to R11 are independently of one another saturated or unsaturated, linear or branched, aliphatic or cycloaliphatic or optionally substituted, aromatic or araliphatic radicals having up to 20 carbon atoms which may optionally comprise heteroatoms from the group of oxygen, sulfur, nitrogen, or represent hydrogen;
L1, L2, and L5 independently of one another represent -O-, -S-, -OC(=O)-, -OC(=S)-, -SC(=O)- - SC(=S)-, -OS(=O)₂O-, -OS(=O)₂- or -N(R12)-,
wherein R12 represents a saturated or unsaturated, linear or branched, aliphatic or cycloaliphatic or an optionally substituted, aromatic or araliphatic radical having up to 20 carbon atoms which may optionally comprise heteroatoms from the group of oxygen, sulfur, nitrogen, or represents hydrogen; L3 and L4 independently of one another represent - OH, -SH, -OR13, -Hal, -OC(=O)R14, -SR15, -OC(=S)R16, -OS(=O)₂OR17, -OS(=O)₂R18 or -NR19R20, or L3 and L4 together represent-Ll-X-D-Y-L2-,
wherein R13 to R20 independently of one another represent saturated or unsaturated, linear or branched, aliphatic or cycloaliphatic or optionally substituted aromatic or araliphatic radicals having up to 20 carbon atoms which may optionally comprise heteroatoms from the group of oxygen, sulfur, nitrogen, or represent hydrogen,
b) wetting a filler D with the reaction mixture obtained in process step a); and
c) curing the mixture obtained in process step b) at a temperature of 120°C to 280°C in less than 30 minutes, wherein at commencement of process step c) the stoichiometric ratio of isocyanate groups of the polyisocyanate A and hydroxyl groups of the polyol B is in the range between 0.7:1 and 10:1.

2. Process according to Claim 1, wherein prior to performance of process step b) the reaction mixture obtained in process step a) is stored at a temperature of not more than 50°C for at least 1 hour and the viscosity of the reaction mixture increases by not more than 200% over this period.

3. Process according to Claim 1 or 2, wherein the polyisocyanate A is selected from the group consisting of aliphatic polyisocyanates and cycloaliphatic polyisocyanates.

4. Process according to Claim 3, wherein the aliphatic polyisocyanates are selected from the group consisting of 1,4-diisocyanatobutane, 1,5-diisocyanatopentane, 1,6-disocyanatohexane, isophorone diisocyanate, H₁₂MDI and oligomeric polyisocyanates constructed from these monomeric isocyanates.

5. Process according to any of Claims 1 to 4, wherein the polyol B is selected from the group consisting of glycol, glycerol, propanediol, butanediol, 1,2,10-decanetriol, 1,2,8-octanetriol, 1,2,3-trihydroxybenzene, 1,1,1-trimethylolpropane, 1,1,1-trimethylolethane, diethylene glycol, pentaerythritol and sugar alcohols.

6. Process according to any of Claims 1 to 5, wherein at least 90 mol% of all isocyanate-reactive groups present in the reaction mixture at commencement of process step c) are hydroxyl groups.

7. Process according to any of Claims 1 to 6, wherein the reaction mixture additionally contains a catalyst E which catalyzes the crosslinking of isocyanate groups to afford isocyanurate groups when the molar ratio of isocyanate groups to hydroxyl-reactive groups in the reaction mixture is at least 3:1.

8. Process according to any of Claims 1 to 7, wherein at commencement of process step c) the stoichiometric ratio of isocyanate groups of the polyisocyanate A to hydroxyl groups of the polyol B is in the range between 0.7:1 and 8:1.

9. Process according to any of Claims 1 to 8, wherein the filler D is selected from the group consisting of wood, cellulose, paper, cardboard, fabric scrap, cork, wheat chaff, polydextrose, cellulose, aramids, polyethylene, carbon, carbon nanotubes, polyester, nylon, Plexiglas, flax, hemp, sisal, AlOH₃, CaCO₃, silicon dioxide, magnesium carbonate, TiO₂, ZnS, minerals containing silicates, sulfates, carbonates, magnesite, barite, mica, dolomite, kaolin, talc, argillaceous minerals, carbon black, graphite, boron nitride, glass, basalt, boron, ceramic and silica.

10. Process according to any of Claims 1 to 9, wherein the filler content of the reaction mixture to be cured in process step c) is at least 15% by weight.

11. Process according to any of Claims 1 to 10, **characterized in that** it is a pultrusion process which employs a fibrous filler D3 which in process step b) is wetted with the reaction mixture from process step a) in an immersion bath or in an injection box and is subsequently cured to afford a profile in a heated mold.

12. Composite material obtainable by the process according to any of Claims 1 to 11.

13. Use of the composite material according to Claim 12 as a profile.

## Revendications

1. Procédé de fabrication d'un matériau composite contenant les étapes
a) mélange d'un polyisocyanate A, d'un polyol B et d'un catalyseur latent C selon l'une des formules (I), (II) ou (III), 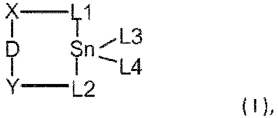 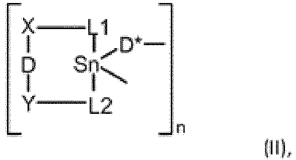 avec n > 1, 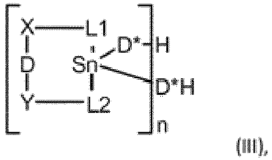 avec n > 1, dans lesquelles :
D représente -O-, -S- ou -N(R1)-
R1 représentant un radical aliphatique ou cycloaliphatique saturé ou insaturé, linéaire ou ramifié, ou un radical aromatique ou araliphatique le cas échéant substitué, comprenant jusqu'à 20 atomes de carbone, qui peut le cas échéant contenir des hétéroatomes de la série oxygène, soufre, azote, ou représentant hydrogène ou le radical 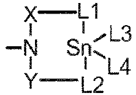 ou R1 et L3 représentant ensemble -Z-L5- ;
D* représente -O- ou -S- ;
X, Y et Z représentent des radicaux identiques ou différents choisis parmi les radicaux alkylène des formules -C(R2)(R3)-, -C(R2)(R3)-C(R4)(R5)- ou -C(R2)(R3)-C(R4)(R5)-C(R6)(R7)- ou des radicaux ortho-arylène des formules 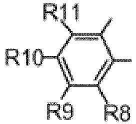 ou 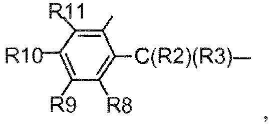 R2 à R11 représentant, indépendamment les uns des autres, des radicaux aliphatiques ou cycloaliphatiques, saturés ou insaturés, linéaires ou ramifiés, ou des radicaux aromatiques ou araliphatiques le cas échéant substitués, comprenant jusqu'à 20 atomes de carbone, qui peuvent le cas échéant contenir des hétéroatomes de la série oxygène, soufre, azote, ou représentant hydrogène ;
L1, L2 et L5 représentent indépendamment les uns des autres -O-, -S-, -OC(=O)-, -OC(=S)-, -SC(=O)-, -SC(=S)-, -OS(=O)₂O-, -OS(=O)₂- ou -N(R12)-,
R12 représentant un radical aliphatique ou cycloaliphatique, saturé ou insaturé, linéaire ou ramifié, ou un radical aromatique ou araliphatique le cas échéant substitué, comprenant jusqu'à 20 atomes de carbone, qui peut le cas échéant contenir des hétéroatomes de la série oxygène, soufre, azote, ou représentant hydrogène ;
L3 et L4 représentent, indépendamment l'un de l'autre, -OH, -SH, -OR13, -Hal, -OC(=O)R14, - SR15, -OC(=S)R16, -OS(=O)₂OR17, -OS(=O)₂R18 ou -NR19R20, ou L3 et L4 représentent ensemble -L1-X-D-Y-L2-,
R13 à R20 représentant, indépendamment les uns des autres, des radicaux aliphatiques ou cycloaliphatiques saturés ou insaturés, linéaires ou ramifiés, ou des radicaux aromatiques ou araliphatiques le cas échéant substitués, comprenant jusqu'à 20 atomes de carbone, qui peuvent le cas échéant contenir des hétéroatomes de la série oxygène, soufre, azote, ou représentant hydrogène,
b) mouillage d'une charge D par le mélange réactionnel obtenu dans l'étape de procédé a) ; et
c) durcissement du mélange obtenu dans l'étape de procédé b) à une température de 120 à 280°C en moins de 30 minutes, le rapport stoechiométrique des groupes isocyanate du polyisocyanate A aux groupes hydroxyle du polyol B au début de l'étape de procédé c) étant situé dans la plage entre 0,7:1 et 10:1.

2. Procédé selon la revendication 1, le mélange réactionnel obtenu dans l'étape de procédé a) étant entreposé, avant la réalisation de l'étape de procédé b), pendant au moins 1 heure à une température d'au plus 50°C et la viscosité du mélange réactionnel augmentant pendant cette période au maximum de 200%.

3. Procédé selon la revendication 1 ou 2, le polyisocyanate A étant choisi dans le groupe constitué par les polyisocyanates aliphatiques et les polyisocyanates cycloaliphatiques.

4. Procédé selon la revendication 3, les polyisocyanates aliphatiques étant choisis dans le groupe constitué par le 1,4-diisocyanatobutane, le 1,5-diisocyanatopentane, le 1,6-diisocyanatohexane, le diisocyanate d'isophorone, le H₁₂MDI et parmi les polyisocyanates oligomères construits à partir de ces isocyanates monomères.

5. Procédé selon l'une quelconque des revendications 1 à 4, le polyol B étant choisi dans le groupe constitué par le glycol, le glycérol, le propanediol, le butanediol, le 1,2,10-décanetriol, le 1,2,8-octanetriol, le 1,2,3-trihydroxybenzène, le 1,1,1-triméthylolpropane, le 1,1,1-triméthyloléthane, le diéthylèneglycol, le pentaérythritol et les alcools de sucre.

6. Procédé selon l'une quelconque des revendications 1 à 5, au moins 90% en mole de tous les groupes réactifs avec isocyanate contenus dans le mélange réactionnel au début de l'étape de procédé c) étant des groupes hydroxyle.

7. Procédé selon l'une quelconque des revendications 1 à 6, le mélange réactionnel contenant en outre un catalyseur E qui catalyse la réticulation de groupes isocyanate en groupes isocyanurate lorsque le rapport molaire des groupes isocyanate aux groupes réactifs avec hydroxyle dans le mélange réactionnel est d'au moins 3:1.

8. Procédé selon l'une quelconque des revendications 1 à 7, le rapport stoechiométrique des groupes isocyanate du polyisocyanate A aux groupes hydroxyle du polyol B au début de l'étape de procédé c) étant situé dans la plage entre 0,7:1 et 8:1.

9. Procédé selon l'une quelconque des revendications 1 à 8, la charge D étant choisie dans le groupe constitué par le bois, la pâte à papier, le papier, le carton, les rognures de tissu, le liège, la balle de blé, le polydextrose, la cellulose, l'aramide, le polyéthylène, le carbone, les nanotubes de carbone, le polyester, le nylon, le plexiglas, le lin, le chanvre, le sisal, l'AlOH₃, le CaCO₃, le dioxyde de silicium, le carbonate de magnésium, le TiO₂, le ZnS, les minéraux contenant des silicates, des sulfates, des carbonates, la magnésite, la baryte, le mica, la dolomite, le kaolin, le talc, les minéraux argileux, la suie, le graphite, le nitrure de bore, le verre, le basalte, le bore, la céramique et la silice.

10. Procédé selon l'une quelconque des revendications 1 à 9, la teneur en charge du mélange réactionnel durcissant dans l'étape de procédé c) étant d'au moins 15% en poids.

11. Procédé selon l'une quelconque des revendications 1 à 10, **caractérisé**
**en ce qu'**il s'agit d'un procédé de pultrusion, dans lequel une charge fibreuse D3 est utilisée, qui est mouillée, dans l'étape de procédé b), dans un bain d'immersion ou dans une boîte d'injection par le mélange réactionnel de l'étape de procédé a) et ensuite durcie en un profilé dans un outil chauffé.

12. Matériau composite pouvant être obtenu par le procédé selon l'une quelconque des revendications 1 à 11.

13. Utilisation du matériau composite selon la revendication 12 comme profilé.
